# EUROPÄISCHE PATENTSCHRIFT

(11) **EP 2 018 808 B1**
(45) Veröffentlichungstag und Bekanntmachung des Hinweises auf die Patenterteilung: **07.04.2010**
(21) Anmeldenummer: 08013169.1
(22) Anmeldetag: 22.07.2008
(51) Int. Cl.: A22C 11/10

(54) **Vorrichtung und Verfahren zum Raffen von mit Füllgut gefüllten Wurstdärmen**
Device and method for gathering sausage casings filled with fill material
Dispositif et procédé destinés à raccourcir des boyaux remplis de matériau de remplissage

(30) Priorität: 27.07.2007 DE 202007010587 U
(43) Veröffentlichungstag der Anmeldung: 28.01.2009
(73) Patentinhaber: Tipper Tie technopack GmbH, 21509 Glinde (DE)
(72) Erfinder: Daufratshofer, Ernst, 87760 Oberrieden (DE); Kranz, Matthias, 22850 Norderstedt (DE)
(74) Vertreter: Glawe, Delfs, Moll

(56) Entgegenhaltungen:
- WO-A-03/030646
- DE-U1-202006 004 579
- GB-A- 696 874
- GB-A- 987 929

## Beschreibung

Die Erfindung betrifft eine Vorrichtung zum Raffen von mit Füllgut gefüllten Wurstdärmen nach dem Oberbegriff des Schutzanspruchs 1.

Gattungsgemäße Vorrichtungen kommen vornehmlich in der Wurstherstellung beim Verschließen der mit Wurstbrät gefüllten schlauchförmigen Kunst- oder Naturdärme zum Einsatz. Dabei wird der einseitig verschlossene Darm mit seinem offenen Ende über das Füllrohr einer Füllmaschine gestülpt. Durch das Rohr füllt die Füllmaschine dann Brät in den Darm, der durch den Druck des nachstoßenden Bräts nach und nach vom Füllrohr abgezogen wird. Wenn ein hinreichend langer Darmabschnitt vom Füllrohr abgezogen ist, kann er mit einem Verschlussmittel verschlossen werden. Als Verschlussmittel werden meist kleine, metallene, U-förmige Klammern eingesetzt. Damit die Klammer aber den Darm umgreifen kann, muss sein Umfang verkleinert werden. Dies bewerkstelligen gattungsgemäße Vorrichtungen. Sie raffen den gefüllten Darm so, dass sich ein füllgutfreier Zopf bildet, um den sich die Klammer legen kann.

Gattungsgemäße Vorrichtungen sind in vielfältigen Ausführungsarten bekannt. Beispielsweise zeigt die DE 195 44 074 C2 eine Vorrichtung, bei der blechförmige Verdrängerscheren linear aufeinander zubewegt werden. Ihre dem Darm zugewandten Kanten sind in geeigneter Weise so geformt, dass der Darm möglichst ohne Beschädigung eingeschnürt wird. Die EP 0 963 698 A1 offenbart Rafferbleche in ähnlicher Ausgestaltung, die nicht linear, sondern mit einer Schwenkbewegung zugestellt werden. Die Anzahl der Raffelemente kann auch mehr als zwei betragen wie im Fall der mindestens drei Einschnürelemente der DE 199 34 154 C1. Bekannt sind auch Vorrichtungen mit nur einem beweglichen Raffelement, wie etwa eine gegen eine feststehende Schlossplatte bewegbare Rafferplatte in der EP 0 782 528 B1 oder in der EP 0 963 699 B1.

Schließlich offenbart das Dokument WO 03/030 646 eine Vorrichtung zum Raffen von Wurstdärmen mit einer Steuereinheit für den Bewegungsablauf des Raffenelements.

Bei bestimmten Anwendungen, insbesondere wenn das Brät grobe, unter Umständen noch gefrorene Brocken enthält, ist es schwierig, den Darm gleichmäßig zu füllen. Um trotzdem eine möglichst gleichmäßige Füllung zu erreichen, muss die Füllmaschine einen erheblichen Druck aufwenden. Wenn die Raffelemente dann auf den Darm drücken, wird ein zusätzlicher Druck ausgeübt. Hierdurch entsteht eine erhöhte Gefahr des Platzens des Darms.

Der Erfindung liegt die Aufgabe zu Grunde, dieser Gefahr zu begegnen. Zur Lösung schlägt sie die Merkmale des kennzeichnenden Teils des Schutzanspruchs 1 vor. Die Unteransprüche beinhalten vorteilhafte Ausgestaltungen.

Die Erfindung beruht auf dem Gedanken, das Brät im gefüllten Darm mechanisch aufzulockern, so dass es sich besser verteilt. Ein erhöhter Druck zur Erreichung einer gleichmäßigen Verteilung ist dann ggf. nicht mehr nötig. Jedenfalls aber verringert bereits die mechanisch erzeugte bessere Verteilung der groben Brätstücke im Darm die Gefahr des Platzens. Die Erfindung fußt ferner auf der Idee, für die mechanische Einwirkung auf den Darm die ohnehin vorhandenen Raffelemente oder zumindest eines davon einzusetzen. Statt das Raffelement in einer durchgehenden Bewegung bis in seine Endposition zu bringen, wird es auf dem Weg dahin hin-und herbewegt. Der Darm wird dadurch gewissermaßen "massiert", und die groben Brätstücke werden durch die abwechselnde Einschnürung und Entspannung nach und nach gleichmäßiger verteilt.

Erfindungsgemäße Raffelemente können alle hinreichend festen, mit geeigneten Kanten versehenen Körper sein, die einen Druck auf einen gefüllten Wurstdarm ausüben können. Mindestens eines davon muss eine Zustellbewegung in Richtung auf die Darmachse durchführen können. Die Darmachse ist die Symmetrieachse des gefüllten schlauchförmigen Darms. Die Bewegung beginnt in einer Anfangsposition, die jede Position sein kann, bei der das Raffelement noch keinen Druck auf den gefüllten Darm ausübt. Die Bewegung endet in einer Endposition. Dies ist eine Position, bei der der Darm so eng zusammengeschnürt ist, dass ein Verschlussmittel ihn umgreifen kann. Idealerweise befindet sich im gerafften Darmbereich überhaupt kein Füllgut mehr. Die Richtung auf die Darmachse muss nicht mit der kürzesten gedachten Verbindungslinie zwischen Raffelement und Darmachse zusammenfallen. Entscheidend ist vielmehr, dass sich die Berührungszone zwischen Raffelement und Darm immer dichter auf die Darmachse zubewegt.

Nach der Erfindung ist für mindestens eines der Raffelemente ein maschineller Antrieb vorhanden. Darunter ist jede Antriebsart außer Handbetätigung zu verstehen, u.a. elektrisch, pneumatisch, hydraulisch. Insbesondere kann der Antrieb aus einer Kurvensteuerung abgeleitet sein.

Dem Antrieb ist erfindungsgemäß eine Steuereinheit für den Bewegungsablauf des Raffelements zugeordnet. Eine erfindungsgemäße Steuereinheit ist dabei jede Vorrichtung, die den Bewegungsablauf des Raffelements zumindest teilweise beeinflusst. Die Steuereinheit kann einen einfachen mechanischen Anschlag umfassen. Es kann sich auch um eine Regelung des exakten Zeitablaufs nach Vorgabe eines einstellbaren Soll-Zeitablaufs handeln. In diesem Fall kann der Antrieb z.B. durch einen Servomotor gebildet und die Steuereinheit eine programmierbare Recheneinheit sein. Unerheblich ist, ob der Antrieb für das Raffelement mit anderen Antrieben, etwa für andere Raffelemente oder für einen Stempel, der das Verschlussmittel bewegt, gekoppelt ist oder nicht.

Für die Erfindung kennzeichnend ist, dass die Steuereinheit derart ausgeführt ist, dass sie automatisch, d.h. ohne Mitwirkung einer Bedienperson, die Zustellbewegung vor Erreichen der Endposition unterbrechen und das Raffelement zurückbewegen kann, bevor die Zustellbewegung fortgesetzt wird, so dass die Vorrichtung den gefüllten Darm "massiert".

Vorteilhafterweise ist dieser Automatismus deaktivierbar, so dass die Vorrichtung sowohl herkömmlich als auch mit der "Massierbewegung" betrieben werden kann.

Vorteilhafterweise kann der Automatismus mehrfach stattfinden, zum Beispiel zwei- oder dreimal. Dies verstärkt die Wirkung der erfindungsgemäßen "Massierbewegung". In diesem Fall ist es weiter vorteilhaft, wenn die vorderen Umkehrpositionen immer dichter an der Endposition liegen. Dadurch wird die Intensität der "Massierbewegung" nach und nach gesteigert. In diesen Fällen ist es überdies vorteilhaft, wenn die hinteren Umkehrpositionen immer dichter an der Endposition liegen. Denn der gefüllte Darm wird bei jeder Entspannung während der Zurückbewegung des Raffelements von Mal zu Mal weniger Platz benötigen. Wenn das Raffelement dementsprechend von Mal zu Mal weniger weit zurückbewegt wird, wird Zeit gespart.

Vorteilhafterweise ist wenigstens eine vordere Umkehrposition vorgebbar. Dies kann dadurch geschehen, dass die Dauer der Zustellbewegung bis zu dieser vorderen Umkehrposition einstellbar ist. Denkbar ist aber auch, die Position des Raffelements mit einem oder mehreren Sensoren zu erfassen, der oder die der Steuereinrichtung ein Signal für das Anhalten des Raffelements geben, wenn dieses die vorgegebene Position erreicht hat. Mit dieser Vorgebbarkeit kann die Vorrichtung besser an die verschiedenen Anwendungen angepasst werden, d.h. je nach Wurstkaliber und Brätkonsistenz kann die vordere Umkehrposition dichter an oder weiter entfernt von der Endposition liegen. Besonders vorteilhaft ist es, wenn sämtliche vorderen Umkehrpositionen vorgebbar sind, da dann eine entsprechend genaue Anpassung an die verschiedenen Anwendungen möglich ist. Dasselbe gilt für wenigstens eine bzw. sämtliche hinteren Umkehrpositionen.

Vorteilhafterweise ist wenigstens eine Verweilzeit des Raffelements an einer vorderen Umkehrposition vorgebbar. Auch dadurch kann die "Massierbewegung" genau an die jeweiligen Anwendungen angepasst werden. Wiederum ist es besonders vorteilhaft, wenn sämtliche Verweilzeiten an vorderen Umkehrpositionen einstellbar sind. Selbiges gilt für wenigstens eine bzw. sämtliche Verweilzeiten an hinteren Umkehrpositionen.

Vorteilhafterweise ist eine Steuerung für die Zustellbewegung des Raffelements vorgesehen, d.h. der zeitliche Verlauf der Kraft, mit der das Raffelement beaufschlagt wird, ist zumindest für einen Teil der Zustellbewegung vorgegeben. Ferner ist es vorteilhaft, wenn die Steuerung einstellbar ist, d.h. der zeitliche Verlauf der Kraft vorgebbar ist. Auch diese Maßnahmen verbessern die Anpassung der Vorrichtung an die verschiedenen Anwendungen.

Vorteilhafterweise ist eine Regelung für die Zustellbewegung des Raffelements vorgesehen, d.h. zumindest für einen Teil der Zustellbewegung ergibt sich die Kraft, mit der das Raffelement zu einem bestimmten Zeitpunkt beaufschlagt wird, aus der Abweichung der sensorisch erfassten Position des Raffelements zu diesem Zeitpunkt von einem für diesen Zeitpunkt vorgegebenen Sollwert. Hierbei ist es besonders vorteilhaft, wenn die Regelung einstellbar ist, d.h. der zeitliche Verlauf der Sollwerte für die Positionen des Raffelements vorgebbar ist. Diese Maßnahmen verbessern ebenfalls die Anpassung der Vorrichtung an die verschiedenen Anwendungen.

Vorteilhafterweise ist die Steuereinheit programmierbar. Die Programme für die Vorrichtung können Daten über Umkehrpositionen und/oder Verweilzeiten umfassen. Vorteilhafterweise sind diese Programme auf einzelne Anwendungen abgestimmt. Ferner ist es vorteilhaft, wenn die Steuereinheit eine Speichereinheit zum Ablegen von Programmen aufweist. Diese Speichereinheit kann beispielsweise ein EEPROM umfassen. Mit einer solchen Speichereinheit ist es nicht erforderlich, beim Wechsel der Anwendung das jeweilige Programm erneut von Hand einzugeben.

Vorteilhafterweise ist die Steuereinheit derart eingerichtet, dass sie wenigstens eine Umkehrposition und/oder Verweilzeit und/oder die Anzahl der Richtungswechsel in Abhängigkeit von wenigstens einer Eigenschaft des Füllguts bestimmt. Eine solche Eigenschaft kann beispielsweise die Temperatur des Bräts oder auch seine Viskosität sein. Es bietet sich insbesondere an, Verweilzeiten oder die Anzahl der Richtungswechsel umso mehr zu erhöhen, je niedriger die Temperatur oder je höher die Viskosität des Füüguts ist. Hierzu ist es außerdem vorteilhaft, wenn die erfindungsgemäße Vorrichtung wenigstens einen Sensor für wenigstens eine Eigenschaft des Füllguts aufweist, mit dem die Steuereinrichtung über eine Signalleitung verbunden ist. Dies kann insbesondere ein Temperaturfühler sein, der in den Trichter der Füllmaschine hineinragt oder an dieser Maschine in anderer geeigneter Weise angebracht ist, so dass er die Temperatur des Füllguts bestimmen kann.

Die erfindungsgemäße Vorrichtung erlaubt die Durchführung eines Verfahrens zum Einschnüren eines gefüllten Wurstdarms gemäß Anspruchs 11, bei dem der Darm mit wenigstens einem maschinell angetriebenen Raffelement auf einen kleineren Durchmesser gerafft wird, wobei dass Raffelement von einer Anfangs- in eine Endposition in Richtung auf die Darmachse zugestellt wird, wobei es automatisch an einer vorderen Umkehrposition zwischen Anfangs- und Endposition angehalten, dann in Richtung der Anfangsposition zurückbewegt, an einer hinteren Umkehrposition erneut angehalten und wieder in Richtung Endposition in Gang gesetzt wird. Das automatische Anhalten an einer vorderen Umkehrposition und Zurückbewegen an eine hintere Umkehrposition und erneute Ingangsetzen in Richtung Endposition kann sich wiederholen, zum Beispiel zwei- oder dreimal, wobei die vorderen und/oder hinteren Endpositionen bei jeder Wiederholung dichter an die Endposition heranrücken können. Das Raffelement kann an wenigstens einer oder sämtlichen vorderen und/oder hinteren Endpositionen für bestimmte, ggf. vorgebbare Zeiten verweilen. Ferner kann die Zustellbewegung zumindest teilweise im oben genannten Sinne gesteuert und/oder geregelt werden.

Nachfolgend wird die Erfindung anhand eines Ausführungsbeispiels näher erläutert. Die sechs Figuren zeigen eine erfindungsgemäße Vorrichtung in sechs verschiedenen Phasen der Zustellbewegung.

Zu beiden gegenüberliegenden Seiten eines im Querschnitt kreisförmigen Wurstdarms 1 befinden sich zwei Rafferbleche 2a, 2b, also zwei Raffelemente. Die dem Wurstdarm 1 zugewandten Kanten dieser Rafferbleche sind in geeigneter Weise geformt, was in den Zeichnungen vereinfachend mit einer konkav geformten Kante angedeutet ist. Jedes der Rafferbleche 2a, 2b wird über eine Antriebsstange 3a, 3b linear von elektrischen Servomotoren 4a, 4b in Richtung auf die Achse des Wurstdarms 1, d.h. in Richtung auf den Mittelpunkt seines kreisförmigen Querschnitts, angetrieben. Die Servomotoren 4a, 4b sind über elektrische Steuerleitungen 5a, 5b mit einer Steuereinheit 6 verbunden. Die Steuereinheit 6 weist ein Display 7 sowie eine Tastatur 8 auf. Über die Tastatur 8 können verschiedene Programme zur Regelung des Bewegungsablaufs der Servomotoren 4a, 4b eingegeben und abgerufen werden. Die Programme werden in einer nicht dargestellten Speichereinheit in der Steuereinheit abgelegt. Die dargestellte Vorrichtung kann Teil einer im Übrigen nicht eingezeichneten Verschlussmaschine sein, die insbesondere auch wenigstens einen Stempel zum Zuführen eines Verschlussmittels an den gerafften Wurstdarm 1 aufweist. Daher kann die Steuereinheit 6 auch Teil einer Steuereinrichtung für die gesamte Verschlussmaschine sein, bei der dann die Bewegung der Raffelemente und des Stempels und/oder ggf. weiterer Komponenten aufeinander abgestimmt sind.

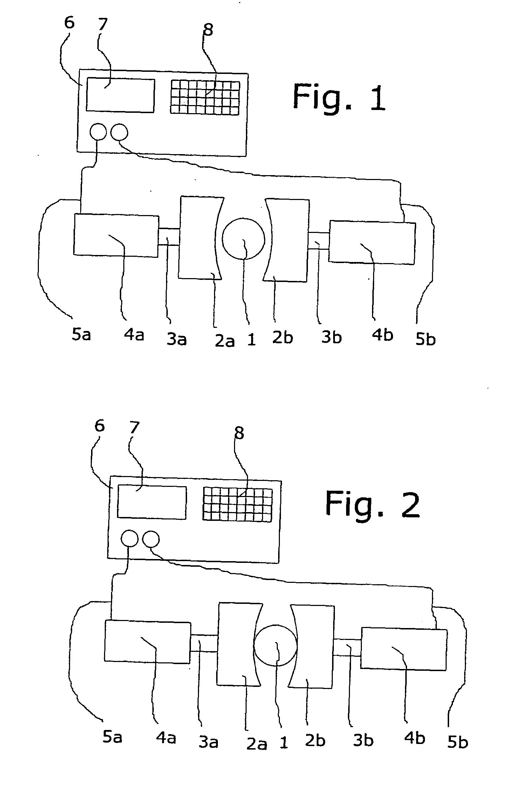

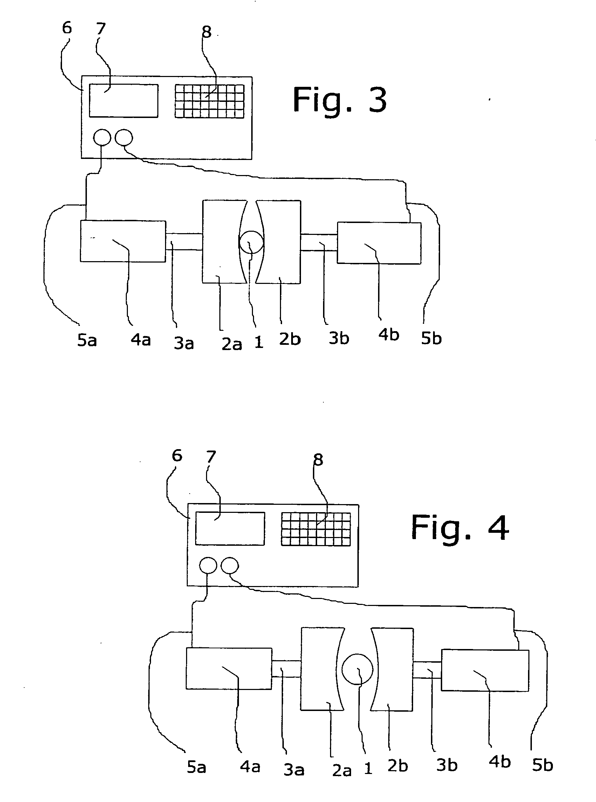

Fig. 1 zeigt die Vorrichtung in der Anfangsposition der Zustellbewegung der Rafferbleche 2a, 2b. In dieser Phase wurde der Wurstdarm 1 gerade von der nicht eingezeichneten Füllmaschine gefüllt. In Fig. 2 sind die Rafferbleche 2a, 2b in Bewegung gesetzt worden, so dass sie auf den Wurstdarm 1 treffen und beginnen, ihn zu raffen. In der in Fig. 3 gezeichneten Phase ist der Wurstdarm 1 ein Stück weit gerafft worden. Es ist eine vordere Umkehrposition erreicht, bei der die Steuereinheit 6 die Rafferbleche 2a, 2b anhält.

Nach einer Verweilzeit in dieser Position werden die Rafferbleche 2a, 2b zurückbewegt, bis sie die in Fig. 4 dargestellte hintere Umkehrposition erreichen. Der Wurstdarm 1 kann sich etwas entspannen, wobei sich gröbere Brocken des Füllguts ggf. umarrangieren können. Nach der Darstellung in Fig. 4 sind die Rafferbleche 2a, 2b so weit zurückgezogen worden, dass sie nicht mehr den Wurstdarm 1 berühren. Dies ist nicht jedoch nicht zwingend. Die Erfindung umfasst auch Ausführungen, bei denen der Wurstdarm 1 sich entspannt, während er mit den Raffelementen 2a, 2b in Berührung bleibt.

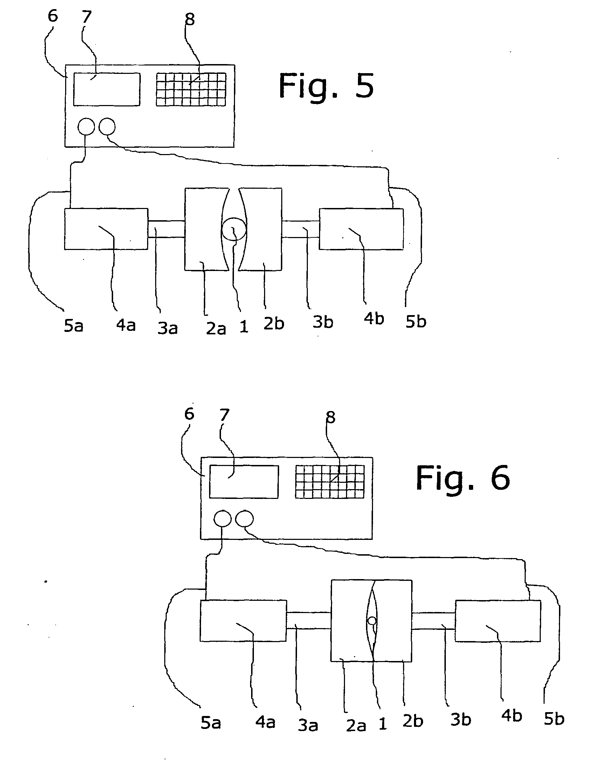

Nach einer Verweilzeit in der in Fig. 4 gezeigten hinteren Umkehrposition werden die Rafferbleche 2a, 2b wieder in Richtung auf den Wurstdarm 1 in Gang gesetzt, so dass die aus Fig. 5 ersichtliche Phase erreicht wird. Die Bewegung setzt sich fort, bis die Rafferbleche 2a, 2b die in Fig. 6 eingezeichnete Endposition erreicht haben. Der Querschnitt des Wurstdarms 1 ist dann so klein, dass sich im Bereich zwischen den Rafferblechen 2a, 2b praktisch kein Füllgut mehr befindet und der Wurstdarm 1 beispielsweise von einer nicht eingezeichneten metallenen Verschlussklammer umgriffen werden kann.

## Patentansprüche

1. Vorrichtung zum Raffen von mit Füllgut gefüllten Wurstdärmen (1) mit wenigstens einem in Richtung auf die Darmachse von einer Anfangs- in eine Endposition zustellbaren Raffelement (2a, 2b) und einem maschinellen Antrieb (4a, 4b) für dieses Raffelement (2a, 2b), dem eine Steuereinheit (6) für den Bewegungsablauf des Raffelements (2a, 2b) zugeordnet ist, **dadurch gekennzeichnet, dass** die Steuereinheit (6) derart ausgeführt ist, dass automatisch das Raffelement (2a, 2b) während der Zustellbewegung an einer vorderen Umkehrposition zwischen Anfangs- und Endposition angehalten, in Richtung Anfangsposition zurückbewegt, an einer hinteren Umkehrposition erneut angehalten und wieder in Richtung Endposition in Gang gesetzt werden kann.

2. Vorrichtung nach Anspruch 1, **dadurch gekennzeichnet, dass** die Steuereinrichtung (6) derart ausgeführt ist, dass automatisch das Raffelement (2a, 2b) während der Zustellbewegung mehrfach vorderen Umkehrpositionen zwischen Anfangs- und Endposition angehalten, dann jeweils in Richtung Anfangsposition zurückbewegt, jeweils an hinteren Umkehrpositionen erneut angehalten und jeweils wieder in Richtung Endposition in Gang gesetzt werden kann.

3. Vorrichtung nach Anspruch 2, **dadurch gekennzeichnet, dass** jede nachfolgende vordere Umkehrposition dichter an der Endposition als die vorausgehende vordere Umkehrposition liegt.

4. Vorrichtung nach Anspruch 2 oder 3, **dadurch gekennzeichnet, dass** jede nachfolgende hintere Umkehrposition dichter an der Endposition als die vorausgehende hintere Umkehrposition liegt.

5. Vorrichtung nach einem der vorgenannten Ansprüche, **dadurch gekennzeichnet, dass** wenigstens eine vordere Umkehrposition beliebig vorgebbar ist.

6. Vorrichtung nach einem der vorgenannten Ansprüche, **dadurch gekennzeichnet, dass** wenigstens eine hintere Umkehrposition beliebig vorgebbar ist.

7. Vorrichtung nach einem der vorgenannten Ansprüche, **dadurch gekennzeichnet, dass** wenigstens eine Verweilzeit des Raffelements (2a, 2b) an einer vorderen Umkehrposition vorgebbar ist.

8. Vorrichtung nach einem der vorgenannten Ansprüche, **dadurch gekennzeichnet, dass** sämtliche Verweilzeiten des Raffelements (2a, 2b) an vorderen Umkehrpositionen vorgebbar sind.

9. Vorrichtung nach einem der vorgenannten Ansprüche, **dadurch gekennzeichnet, dass** wenigstens eine Verweilzeit des Raffelements (2a, 2b) an einer hinteren Umkehrposition vorgebbar ist.

10. Vorrichtung nach einem der vorgenannten Ansprüche, **dadurch gekennzeichnet, dass** sämtliche Verweilzeiten des Raffelements (2a, 2b) an hinteren Umkehrpositionen vorgebbar sind.

11. Vorrichtung nach einem der vorgenannten Ansprüche, **dadurch gekennzeichnet, dass** die Steuereinheit (6) derart eingerichtet ist, dass sie wenigstens eine Umkehrposition und/oder Verweilzeit und/oder die Anzahl der Richtungswechsel der Zustellbewegung des Raffelements (2a, 2b) in Abhängigkeit von wenigstens einer Eigenschaft des Füllguts bestimmt.

12. Vorrichtung nach einem der vorgenannten Ansprüche, **dadurch gekennzeichnet, dass** sie wenigstens einen Sensor für wenigstens eine Eigenschaft des Füllguts aufweist, mit dem die Steuereinrichtung (6) über eine Signalleitung verbunden ist.

13. Verfahren zum Einschnüren eines gefüllten Wurstdarms (1), bei dem der Darm (1) mit wenigstens einem maschinell angetriebenen Raffelement (2a, 2b) auf einen kleineren Durchmesser gerafft wird, wobei dass Raffelement (2a, 2b) von einer Anfangs- in eine Endposition in Richtung auf die Darmachse zugestellt wird, **dadurch gekennzeichnet, dass** es automatisch an einer vorderen Umkehrposition zwischen Anfangs- und Endposition angehalten, dann in Richtung der Anfangsposition zurückbewegt, an einer hinteren Umkehrposition erneut angehalten und wieder in Richtung Endposition in Gang gesetzt wird.

14. Verfahren nach Anspruch 13, **dadurch gekennzeichnet, dass** sich das automatische Anhalten an einer vorderen Umkehrposition und Zurückbewegen an eine hintere Umkehrposition und erneute Ingangsetzen in Richtung Endposition wiederholt.

15. Verfahren nach Anspruch 14, **dadurch gekennzeichnet, dass** vorderen und hinteren Endpositionen bei jeder Wiederholung dichter an die Endposition heranrücken.

## Claims

1. Device for gathering sausage casings (1) filled with filling material, having at least one gathering element (2a, 2b) which can be fed from an initial position to an end position in the direction of the casing axis, and a mechanical drive (4a, 4b) for this gathering element (2a, 2b), which is assigned a control unit (6) for the movement sequence of the gathering element (2a, 2b), **characterized in that** the control unit (6) is designed in such a way that, automatically, the gathering element (2a, 2b) can be stopped during the feed movement in a forward reversal position between initial and end position, moved back in the direction of the initial position, stopped again in a rear reversal position and set moving in the direction of the end position again.

2. Device according to Claim 1, **characterized in that** the control device (6) is designed in such a way that, automatically, the gathering element (2a, 2b) can be stopped repeatedly during the feed movement in forward reversal positions between initial and end position, then moved back in the direction of the initial position in each case, stopped again in a rear reversal position in each case and in each case set moving in the direction of the end position again.

3. Device according to Claim 2, **characterized in that** each successive forward reversal position lies closer to the end position than the preceding forward reversal position.

4. Device according to Claim 2 or 3, **characterized in that** each successive rear reversal position lies closer to the end position than the preceding rear reversal position.

5. Device according to one of the preceding claims, **characterized in that** at least one forward reversal position can be predefined as desired.

6. Device according to one of the preceding claims, **characterized in that** at least one rear reversal position can be predefined as desired.

7. Device according to one of the preceding claims, **characterized in that** at least one waiting time of the gathering element (2a, 2b) in a forward reversal position can be predefined.

8. Device according to one of the preceding claims, **characterized in that** all the waiting times of the gathering element (2a, 2b) in forward reversal positions can be predefined.

9. Device according to one of the preceding claims, **characterized in that** at least one waiting time of the gathering element (2a, 2b) in a rear reversal position can be predefined.

10. Device according to one of the preceding claims, **characterized in that** all the waiting times of the gathering element (2a, 2b) in rear reversal positions can be predefined.

11. Device according to one of the preceding claims, **characterized in that** the control unit (6) is set up in such a way that it determines at least one reversal position and/or waiting time and/or the number of changes of direction of the feed movement of the gathering element (2a, 2b) as a function of at least one property of the filling material.

12. Device according to one of the preceding claims, **characterized in that** it has at least one sensor for at least one property of the filling material, to which sensor the control device (6) is connected via a signal line.

13. Method for constricting a filled sausage casing (1), in which the casing (1) is gathered to a smaller diameter by using at least one mechanically driven gathering element (2a, 2b), the gathering element (2a, 2b) being fed from an initial position to an end position in the direction of the casing axis, **characterized in that** the gathering element is stopped automatically in a forward reversal position between initial and end position, is then moved back in the direction of the initial position, stopped again in a rear reversal position and set moving in the direction of the end position again.

14. Method according to Claim 13, **characterized in that** the automatic stopping in a forward reversal position and moving back to a rear reversal position and renewed starting of movement in the direction of the end position is repeated.

15. Method according to Claim 14, **characterized in that** forward and rear end positions move closer to the end position during each repetition.

## Revendications

1. Dispositif destiné à resserrer des boyaux de saucisse (1) contenant une matière de remplissage, comportant au moins un élément de resserrage (2a, 2b), pouvant être amené vers l'axe du boyau depuis une position initiale dans une position finale, et un système d'actionnement (4a, 4b) mécanique pour ledit élément de resserrage (2a, 2b), auquel est associée une unité de commande (6) pour le déroulement du mouvement de l'élément de resserrage (2a, 2b), **caractérisé en ce que** l'unité de commande (6) est configurée de telle sorte que l'élément de resserrage (2a, 2b) pendant le mouvement de réglage est arrêté automatiquement dans une position de renvoi avant entre la position initiale et la position finale, est amené en retour vers la position initiale, est à nouveau arrêté dans une position de renvoi arrière et peut à nouveau être amené vers la position finale.

2. Dispositif selon la revendication 1, **caractérisé en ce que** l'unité de commande (6) est configurée de telle sorte que l'élément de resserrage (2a, 2b) pendant le mouvement de réglage est arrêté automatiquement à plusieurs reprises dans des positions de renvoi avant entre la position initiale et la position finale, puis, dans chaque cas, est amené en retour vers la position initiale, est à nouveau arrêté dans chaque cas dans des positions de renvoi arrière et peut à nouveau dans chaque cas être amené vers la position finale.

3. Dispositif selon la revendication 2, **caractérisé en ce que** chaque position de renvoi avant consécutive est située plus près de la position finale que la position de renvoi avant précédente.

4. Dispositif selon la revendication 2 ou 3, **caractérisé en ce que** chaque position de renvoi arrière consécutive est située plus près de la position finale que la position de renvoi arrière précédente.

5. Dispositif selon l'une quelconque des revendications précédentes, **caractérisé en ce qu'**au moins une position de renvoi avant peut être prédéfinie au choix.

6. Dispositif selon l'une quelconque des revendications précédentes, **caractérisé en ce qu'**au moins une position de renvoi arrière peut être prédéfinie au choix.

7. Dispositif selon l'une quelconque des revendications précédentes, **caractérisé en ce qu'**au moins un temps d'attente de l'élément de resserrage (2a, 2b) peut être prédéfini dans une position de renvoi avant.

8. Dispositif selon l'une quelconque des revendications précédentes, **caractérisé en ce que** tous les temps d'attente de l'élément de resserrage (2a, 2b) peuvent être prédéfinis dans des positions de renvoi avant.

9. Dispositif selon l'une quelconque des revendications précédentes, **caractérisé en ce qu'**au moins un temps d'attente de l'élément de resserrage (2a, 2b) peut être prédéfini dans une position de renvoi arrière.

10. Dispositif selon l'une quelconque des revendications précédentes, **caractérisé en ce que** tous les temps d'attente de l'élément de resserrage (2a, 2b) peuvent être prédéfinis dans des positions de renvoi arrière.

11. Dispositif selon l'une quelconque des revendications précédentes, **caractérisé en ce que** l'unité de commande (6) est configurée de telle sorte qu'elle détermine au moins une position de renvoi et/ou un temps d'attente et/ou le nombre de changements de direction du mouvement de réglage de l'élément de resserrage (2a, 2b) en fonction d'au moins une propriété de la matière de remplissage.

12. Dispositif selon l'une quelconque des revendications précédentes, **caractérisé en ce qu'**il comporte au moins un capteur pour au moins une propriété de la matière de remplissage, auquel est reliée l'unité de commande (6) par l'intermédiaire d'une ligne de transmission de signaux.

13. Procédé pour le resserrage d'un boyau de saucisse (1) rempli, dans lequel le boyau (1) est resserré à un plus petit diamètre au moyen d'au moins un élément de resserrage (2a, 2b) actionné mécaniquement, l'élément de resserrage (2a, 2b) étant amené vers l'axe du boyau depuis une position initiale dans une position finale, **caractérisé en ce que** celui-ci est arrêté automatiquement dans une position de renvoi avant entre la position initiale et la position finale, puis est amené en retour vers la position initiale, est à nouveau arrêté dans une position de renvoi arrière et est à nouveau amené vers la position finale.

14. Procédé selon la revendication 13, **caractérisé en ce que** l'arrêt automatique dans une position de renvoi avant et le mouvement de retour dans une position de renvoi arrière et la remise en mouvement vers la position finale se répètent.

15. Procédé selon la revendication 14, **caractérisé en ce que** dans chaque répétition, les positions finales avant et arrière s'avancent plus près de la position finale.
